# FASCICULE DE BREVET EUROPEEN

(11) **EP 3 003 859 B1**
(45) Date de publication et mention de la délivrance du brevet: **10.05.2017**
(21) Numéro de dépôt: 14727507.7
(22) Date de dépôt: 02.06.2014
(51) Int. Cl.: B64D 27/24

(54) **DISPOSITIF D'ALIMENTATION ELECTRIQUE POUR AERONEF A PROPULSION ELECTRIQUE**
VORRICHTUNG ZUR VERSORGUNG EINES ELEKTROFLUGZEUGS MIT ELEKTRIZITÄT
ELECTRIC SUPPLY DEVICE FOR AN ELECTRIC PROPULSION AIRCRAFT

(30) Priorité: 07.06.2013 FR 1355250
(43) Date de publication de la demande: 13.04.2016
(73) Titulaire: European Aeronautic Defence And Space Company Eads France, 75016 Paris (FR); Airbus Group SAS, 31700 Blagnac (FR)
(72) Inventeur: ESTEYNE, Didier, F-17600 Saujon (FR); JOUBERT, Emmanuel, F-92130 Issy les Moulineaux (FR); SMAOUI, Hichem, 31200 Toulouse (FR); NESPOULOUS, Charles, F-92210 Saint Cloud (FR); RECHAIN, Bruno, F-92270 Bois-Colombes (FR)
(74) Mandataire: Deschamps, Samuel
(86) Numéro de dépôt international: PCT/EP2014/061310
(87) Numéro de publication internationale: WO 2014/195246

(56) Documents cités:
- EP-A2- 2 404 775
- DE-A1-102011 105 880
- US-A- 4 605 185

## Description

### Domaine de l'invention

La présente invention se rapporte à un dispositif d'alimentation électrique pour aéronef à propulsion électrique. L'invention se rapporte également à un procédé de démarrage associé au dispositif ainsi qu'à un aéronef comportant ledit dispositif.

L'invention trouve une application particulièrement avantageuse dans un aéronef à propulsion électrique apte à transporter une pluralité de personnes, tel que les aéronefs biplaces.

### Etat de la technique

Les aéronefs à propulsion thermique participent au réchauffement climatique, à la raréfaction des énergies fossiles ainsi qu'à la pollution de l'atmosphère. Pour pallier à ces inconvénients, les aéronefs à propulsion électrique constituent un développement nécessaire pour l'avenir des transports aériens.

On entend par aéronef « à propulsion électrique », un aéronef qui n'utilise pas d'énergie fossile, tel que le kérosène, et qui utilise l'énergie électrique pour assurer sa propulsion (voir, par exemple, le document US4605185). En outre, un aéronef à propulsion électrique peut mettre en oeuvre des réactions chimiques, notamment pour le fonctionnement des dispositifs de stockage, et des moyens mécaniques, notamment pour l'actionnement des commandes de pilotage.

Les aéronefs à propulsion thermique présentent un rendement de l'ordre de 30 à 40% entre l'énergie consommée et l'énergie mécanique produite pour permettre le déplacement de l'aéronef. Un aéronef à propulsion électrique permet d'atteindre des rendements de l'ordre de 90%. L'énergie électrique permet ainsi de réaliser des vols dont le coût en énergie est moindre. Les aéronefs à propulsion électrique sont également plus réactifs.

Dans le cadre du projet « The Green Cricri », un aéronef électrique monoplace dont la propulsion est assurée par quatre moteurs électriques disposés à l'avant de l'aéronef a été mis au point. Chaque moteur électrique est alimenté par un pack de batteries. L'aéronef comporte également des organes de contrôle et de commande de l'aéronef connectés à deux packs de batteries dont le niveau de tension est plus faible que les quatre packs de batteries alimentant les moteurs électriques. L'inconvénient majeur de ce dispositif d'alimentation électrique est la présence des quatre packs de batteries qui encombrent fortement l'aéronef.

Dans le cadre du projet « e-Genius », un aéronef électrique biplace dont la propulsion est assurée par un moteur électrique disposé à l'arrière de l'aéronef a été mis au point. Le moteur électrique est alimenté par quatre packs de batteries. Un convertisseur électrique permet de réutiliser la tension du pack de batteries pour alimenter des organes de contrôle et de commande de l'aéronef selon un niveau de tension plus faible que celui utilisé pour alimenter le moteur électrique. Le principal inconvénient de ce dispositif est de ne posséder qu'un seul moteur électrique à hélice limitant l'efficacité de l'aéronef pour se déplacer en roulage au sol.

La demande de brevet allemand N° DE 10 2011 105 880 (EADS Deutschland GmbH) décrit également un aéronef avec un moteur électrique arrière assurant la propulsion. Le moteur électrique est alimenté par un pack de batteries dont la position est variable selon un axe longitudinal de l'aéronef. Les variations de la position du pack de batteries permettent d'équilibrer l'aéronef dans les phases de vol.

### Exposé de l'invention

La présente invention entend remédier aux inconvénients de l'art antérieur en proposant une solution qui permet de limiter le nombre de pack de batteries et d'assurer une propulsion d'un aéronef à propulsion électrique en cas de défaillance d'un pack de batteries.

A cet effet, la présente invention concerne, dans son acception la plus générale, un dispositif d'alimentation électrique pour aéronef à propulsion électrique comportant :
- un premier et un deuxième moteur électrique aptes à assurer la propulsion de l'aéronef,
- un premier et un deuxième circuit électrique haute-tension connectés respectivement aux deux moteurs électriques,
- un circuit électrique basse-tension connecté à au moins un organe de contrôle et/ou de commande de l'aéronef,
- un premier et un deuxième pack de batteries connectés respectivement aux deux circuits électriques haute-tension,
- un premier et un deuxième système de gestion des batteries connectés au circuit basse-tension, les systèmes de gestion des batteries étant reliés respectivement aux deux packs de batteries, et
- un convertisseur électrique connecté d'une part au premier circuit électrique haute-tension et d'autre part au circuit électrique basse-tension.

L'invention permet ainsi de limiter le nombre de pack de batteries en réutilisant la tension du premier circuit électrique haute-tension pour alimenter le circuit électrique basse-tension. De plus, le dispositif permet d'alimenter deux moteurs électriques assurant une propulsion de l'aéronef même si un pack de batteries est hors d'usage.

Selon un mode de réalisation, le dispositif comporte une batterie de secours connectée au premier système de gestion des batteries par l'intermédiaire d'un interrupteur, la batterie de secours étant apte à délivrer le courant nécessaire pour la mise en marche du dispositif. Ce mode de réalisation permet d'utiliser une batterie de secours pour démarrer le dispositif. En outre, la batterie de secours permet d'alimenter les éléments essentiels de l'aéronef lorsque le convertisseur et/ou le premier pack de batteries est hors d'usage. L'aéronef peut ainsi voler efficacement en utilisant au moins un moteur électrique et en conservant tous les moyens de contrôle et de commande essentiels à la navigation tels que la radio ou les trains d'atterrissage ou certaines parties mobiles des commandes de vols qui fonctionnent avec des vérins électriques.

Selon un mode de réalisation, le dispositif comporte un circuit électrique très basse-tension connecté à au moins un organe de contrôle et/ou de commande de l'aéronef et un convertisseur électrique connecté d'une part audit circuit électrique basse-tension et d'autre part audit circuit électrique très basse-tension. Ce mode de réalisation permet d'alimenter certains organes de contrôle et/ou de commande avec un niveau de tension inférieur au niveau de tension du circuit basse-tension. Typiquement, le niveau de tension du circuit haute-tension peut être compris entre 200 volts et 250 volts, nominalement 220 volts. Le niveau de tension du circuit basse-tension peut être compris entre 20 volts et 30 volts, nominalement 24 volts et le niveau de tension du circuit très basse-tension peut être compris entre 10 volts et 15 volts, nominalement 12 volts.

Selon un mode de réalisation, le dispositif comporte une prise de charge connecté sur les deux circuits électriques haute-tension, la prise de charge étant apte à recharger les deux packs de batteries. Ce mode de réalisation permet de limiter l'encombrement et la masse des prises de charge des deux packs de batteries.

Selon un mode de réalisation, le dispositif comporte un premier et un deuxième onduleur de tension aptes à transformer une tension continue haute-tension en énergie alternative triphasée par hachage, chaque onduleur étant connecté entre un circuit électrique haute-tension et le moteur électrique correspondant. Ce mode de réalisation permet de connecter une batterie délivrant une tension continue à un moteur électrique triphasé. De plus, l'énergie électrique alternative triphasée permet d'alimenter efficacement un moteur électrique de forte puissance.

Selon un mode de réalisation, le dispositif comporte un premier et un deuxième système de gestion moteur connectés entre un circuit électrique haute tension et l'onduleur correspondant, chaque système de gestion moteur comportant au moins un capteur à effet Hall apte à renseigner sur la position d'un rotor du moteur, un interrupteur principal apte à couper l'alimentation électrique du moteur et un moyen de supervision de la tension appliquée au moteur. Ce mode de réalisation permet de contrôler efficacement les paramètres de chaque moteur électrique, par exemple dans le cas d'un moteur sans balai. En variante, le moyen de supervision peut également surveiller le régime du moteur.

Un moteur sans balai (également appelé moteur « brushless ») comprend un rotor muni d'un ou plusieurs aimants permanents et d'au moins deux capteurs de position rotorique, dans ce cas trois capteurs à effet hall. Un stator du moteur est alimenté suivant trois phases pour induire un champ magnétique tournant entrainant le rotor. Lorsque le rotor tourne, les capteurs de position envoient un signal de position au système de gestion moteur afin que les changements de phases du moteur anticipent la position du rotor.

Selon un mode de réalisation, les systèmes de gestion moteur et les systèmes de gestion de batteries comportent un convertisseur de secours connecté au deuxième circuit électrique haute-tension. Ce mode de réalisation permet d'alimenter les éléments sensibles en cas de coupure d'alimentation du premier circuit haute tension ou d'une défaillance du convertisseur haute tension / basse tension sans utiliser la batterie de secours qui peut avoir une charge limitée. Lorsqu'une coupure du circuit basse-tension est détectée, les convertisseurs de secours se mettent automatiquement en marche, les systèmes de gestion moteur et les systèmes de gestion de batteries ne sont alimentés que par le deuxième circuit électrique haute-tension.

Selon un mode de réalisation, au moins un pack de batteries comporte des batteries Lithium-ion pour une capacité de stockage totale comprise entre 40 et 80Ah. Ce mode de réalisation permet au pack de batterie de délivrer une énergie massique élevée (deux à cinq fois plus que le nickel-hydrure métallique par exemple) sans apparence du phénomène d'effet mémoire. Un pack de batteries de Lithium-ion peut comporter entre cinquante et soixante-dix éléments pour obtenir une capacité de stockage totale comprise entre 40 et 80 Ah, préférentiellement, le pack de batteries comporte soixante éléments.

Selon un deuxième aspect, l'invention concerne un aéronef à propulsion électrique comportant au moins deux moteurs électriques et un dispositif d'alimentation selon l'un des modes de réalisations précédents.

Selon un troisième aspect, l'invention concerne un procédé de démarrage d'un aéronef à propulsion électrique comportant les étapes suivantes :
- fermeture d'un interrupteur pour connecter une batterie de secours au premier système de gestion des batteries,
- vérification de la tension de la batterie de secours au moyen du système de gestion des batteries et interruption du démarrage si la tension de la batterie de secours est inférieure à un seuil critique,
- mise en route d'une précharge d'un onduleur,
- fermeture d'un contacteur d'un pack de batteries,
- mise en route du convertisseur électrique,
- vérification de la tension d'au moins un pack de batteries au moyen du système de gestion des batteries et interruption du démarrage si la tension d'au moins un pack de batterie est inférieure à un seuil critique, et
- ouverture de l'interrupteur pour déconnecter la batterie de secours.

### Brève description des dessins

On comprendra mieux l'invention à l'aide de la description, faite ci-après à titre purement explicatif, des modes de réalisation de l'invention, en référence aux Figures dans lesquelles :
- la Figure 1 illustre un aéronef à propulsion électrique comportant un dispositif selon la présente invention ;
- la Figure 2 illustre un dispositif d'alimentation électrique selon un premier mode de réalisation de l'invention dans lequel le dispositif d'alimentation comporte deux moteurs électriques ;
- la Figure 3 illustre un dispositif d'alimentation électrique selon un deuxième mode de réalisation de l'invention dans lequel le dispositif d'alimentation comporte trois moteurs électriques ; et
- la Figure 4 illustre une partie d'un dispositif d'alimentation électrique selon un troisième mode de réalisation de l'invention.

### Description détaillée des modes de réalisation de l'invention

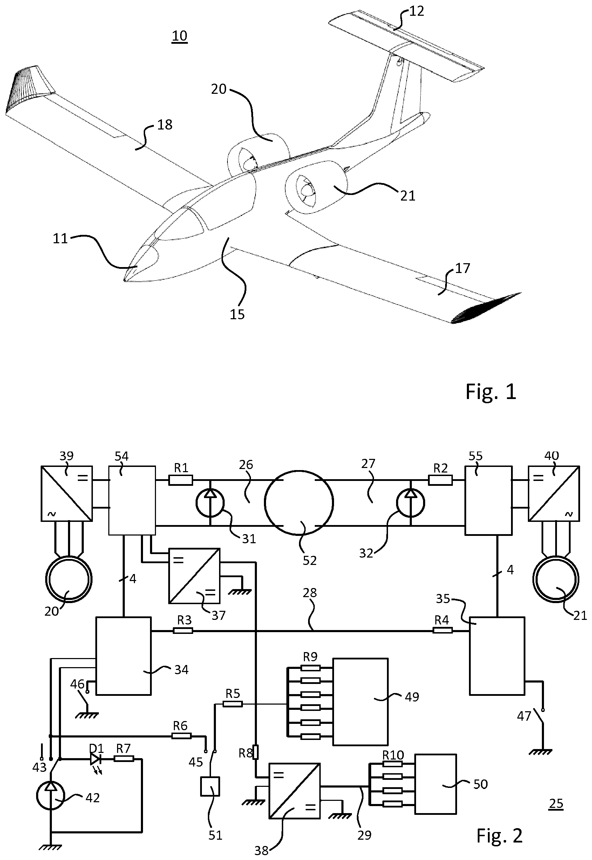

La Figure 1 illustre un aéronef à propulsion électrique 10 comportant un nez 11 disposé à l'avant de l'appareil et une queue 12 disposée à l'arrière de l'appareil, le nez 11 et la queue 12 étant reliés par un fuselage 15. Deux ailes 17-18 s'étendent sur les côtes de l'appareil de sorte à assurer la portance de l'aéronef 10 dans l'air.

L'aéronef 10 comporte également deux moteurs électriques 20-21 dont le dispositif d'alimentation électrique 25 est représenté schématiquement sur les Figures 2 à 4. La forme et la taille de l'aéronef peuvent varier sans changer l'invention.

La Figure 2 illustre un dispositif d'alimentation électrique 25 comportant deux moteurs électriques 20 et 21, chacun connecté sur un circuit électrique haute tension 26, 27 alimenté par un pack de batteries 31, 32. A cet effet, chaque pack de batteries 31, 32 est en série avec un fusible R1, R2, un système de gestion moteur 54, 55 et un onduleur 39, 40.

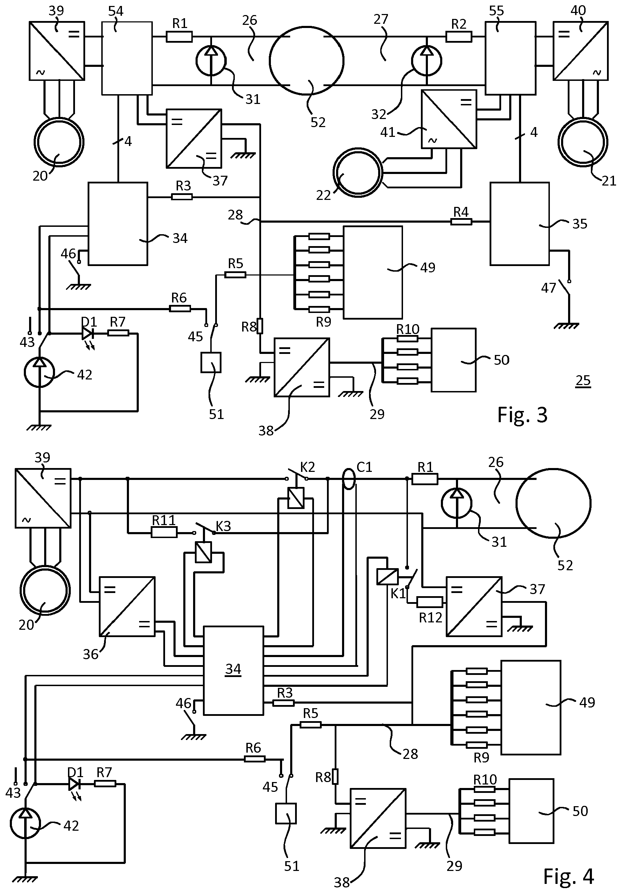

Sur le mode de réalisation de la Figure 3, le dispositif 25 comporte trois moteurs électriques 20, 21, 22. Le troisième moteur électrique 22 est connecté sur le deuxième système de gestion moteur 55 par l'intermédiaire d'un onduleur 41. En variante, le dispositif peut comporter autant de moteur électrique que nécessaire pour assurer la propulsion de l'aéronef 10.

Le fusible R1, R2 a pour effet de protéger de protéger le pack de batteries 31, 32 des surtensions. Le dispositif peut également comporter des résistances de précharge, non représentées, pour éviter des étincelles lors de la mise sous tension du circuit haute-tension

L'onduleur 39, 40 permet de transformer une tension continue haute-tension en énergie alternative triphasée apte à alimenter des enroulements du stator du moteur électrique 20, 21. De préférence, l'onduleur 39, 40 comprend une fréquence de transformation comprise entre 15 kHz et 20 kHz. Le système de gestion moteur 54, 55 comprend au moins deux capteurs à effet Hall apte à renseigner sur la position du stator du moteur électrique 20, 21, un interrupteur principal apte à couper l'alimentation électrique du moteur électrique 20, 21 et un moyen de supervision de la tension appliquée au moteur électrique 20, 21. Les capteurs à effet Hall permettent d'anticiper les commandes de couple et de vitesse du moteur électrique 20, 21 en fonction de sa position mesurée. Le moyen de supervision permet de mesurer un éventuel retard de phase au niveau de l'onduleur 39, 40.

Les deux packs de batteries 31, 32 peuvent être rechargés simultanément par une prise de charge 52 connectée aux deux packs de batteries 31, 32. De préférence, chaque pack de batteries 31, 32 comporte plusieurs batteries de Lithium-ion pour une capacité totale comprise entre 40 et 80Ah, de préférence 40Ah. Un pack de batteries 31, 32 peut contenir entre cinquante et soixante-dix éléments, de préférence il comporte soixante éléments.

Un système de gestion des batteries 34, 35 surveille les éléments de chaque pack de batteries 31, 32. Le système de gestion des batteries 34, 35 analyse la température, la tension et contrôle la charge de chaque élément du pack de batteries 31, 32 associé au moyen de capteurs disposés sur chaque élément de chaque pack de batteries 31, 32. En outre, chaque système de gestion des batteries 34, 35 communique avec le système de gestion moteur 54, 55 associé au moyen d'un bus de donnés, par exemple au moyen d'un protocole CAN (pour « Controller Area Network » ou contrôleur de réseau).

Les systèmes de gestion des batteries 34, 35 comportent une entrée pouvant être reliée à la masse par un interrupteur 46, 47 afin de déclencher le démarrage du système de gestion des batteries 34, 35. En outre, les systèmes de gestion des batteries 34, 35 sont alimentés par un circuit électrique basse-tension 28 par l'intermédiaire d'une résistance R3, R4.

Le circuit électrique basse-tension 28 est alimenté par un convertisseur 37 connecté au premier circuit électrique haute-tension 26. Le circuit électrique haute-tension 26 comporte une tension continue comprise entre 200 et 250 Volts, préférentiellement 220 Volts. Le circuit électrique basse-tension 28 comporte une tension continue comprise entre 20 et 30 Volts, préférentiellement 24 Volts. Le circuit électrique basse-tension 28 alimente au moins un organe 49 de contrôle et/ou de commande de l'aéronef par l'intermédiaire d'une résistance R9 pour chaque organe 49. Les organes 49 de contrôle et/ou de commande peuvent être des outils de télémétrie, des moyens de télécommunication ou autre.

Le circuit électrique basse-tension 28 est également connecté à un convertisseur 38 par l'intermédiaire d'une résistance R8. Le convertisseur 38 alimente un circuit électrique très basse-tension 29 comportant une tension continue comprise entre 10 et 15 Volts, préférentiellement 12 Volts. Le circuit électrique très basse-tension 29 alimente également au moins un organe 50 de contrôle et/ou de commande de l'aéronef par l'intermédiaire d'une résistance R10 pour chaque organe 50. Les organes 50 de contrôle et/ou de commande peuvent être des indicateurs de vol, des actionneurs de positionnement de l'aéronef, la radio ou autre.

D'autres actionneurs 51 peuvent être alimentés par le circuit électrique basse-tension 28 par l'intermédiaire d'une résistance R5 lorsque l'interrupteur 45 est dans une première position. Ces actionneurs 51 peuvent permettre la sortie des roues ou la sortie des palans. Lorsque l'interrupteur 45 est dans une seconde position, ces actionneurs 51 peuvent être alimentés pas une batterie de secours 42 lorsque l'interrupteur 43 est dans la seconde position. Les premières et secondes positions de l'interrupteur 43 sont reliées à deux entrées distinctes du premier système de gestion des batteries 34. La première position de l'interrupteur 43 est également reliée à une diode électroluminescente D1 en série avec une résistance R7. Une troisième position de l'interrupteur 43 permet de déconnecter totalement la batterie de secours 42. Cette batterie de secours est apte à fournir une tension continue basse-tension pour alimenter le premier système de gestion de batteries 43 et démarrer le dispositif 25.

Lors de la phase de démarrage de l'aéronef 10, la première étape consiste à mettre l'interrupteur 43 dans la première position pour connecter la batterie de secours 42 au premier système de gestion des batteries 34. Le système de gestion des batteries 34 effectue ensuite une vérification de la tension de la batterie de secours et interrompt le démarrage si la tension de la batterie de secours 42 est inférieure à un seuil critique. Dans le cas contraire, le système de gestion des batteries 34 met en route le convertisseur électrique 37. Le système de gestion des batteries 34 effectue ensuite une vérification de la tension d'au moins un pack de batteries 31, 32 et interrompt le démarrage si la tension d'au moins un pack de batterie 31, 32 est inférieure à un seuil critique. Dans le cas contraire, le système de gestion des batteries 34 met l'interrupteur 43 dans la troisième position et met en route au moins un moteur électrique 20, 21.

En variante, chaque élément sensible de l'aéronef tel que les systèmes de gestion moteur 54, 55 et les systèmes de gestion des batteries 34, 35 comporte un convertisseur de secours connecté au deuxième circuit électrique haute-tension 27.

La Figure 4 montre un mode de réalisation de l'invention pour lequel le dispositif 25 est représenté seulement en partie. Le dispositif 25 ne comporte pas de système de gestion moteur 54. Cependant le premier système de gestion des batteries 34 commande trois contacteurs K1-K3 et un capteur C1.

Le premier contacteur K1 permet de relier le convertisseur 37 avec le circuit haute-tension 26. Ce contacteur est ouvert lors du démarrage du dispositif 25 et le système de gestion des batteries 34 impose sa fermeture pour le fonctionnement normal de l'aéronef. Les contacteurs K2 et K3 peuvent être alternativement utilisés pour utiliser la résistance R11 et modifier le rendement du pack de batteries 31. Le capteur C1 renseigne le système de gestion des batteries 34 sur la tension ou le courant du pack de batteries 31.

La Figure 4 montre également que le système de gestion des batteries 34 peut être alimenté directement sur le circuit haute-tension 26 par l'intermédiaire d'un convertisseur 36 délivrant une tension basse-tension équivalente à la tension du circuit basse-tension 28.

L'invention permet ainsi d'alimenter un aéronef à propulsion électrique 10 en limitant le nombre de packs de batteries 31, 32 et mettant en oeuvre une batterie de secours 42 apte à démarrer ou redémarrer le dispositif 25 en cas de problème sur un élément du dispositif 25.

L'invention est transposable à un aéronef à propulsion électrique comportant plus de deux moteurs en ajoutant des packs de batteries avec les circuits de commandes adhoc.

## Revendications

1. Dispositif d'alimentation électrique (25) pour aéronef à propulsion électrique (10), comportant:
- un premier et un deuxième moteur électrique (20, 21) aptes à assurer la propulsion de l'aéronef (10),
- un premier et un deuxième circuit électrique haute-tension (26, 27) connectés respectivement aux deux moteurs électriques (20, 21),
- un circuit électrique basse-tension (28) connecté à au moins un organe (49) de contrôle et/ou de commande de l'aéronef (10),
- un convertisseur électrique (37) connecté d'une part au premier circuit électrique haute-tension (26) et d'autre part au circuit électrique basse-tension (46,50), **caractérisé en ce qu'**il comporte:
- un premier et un deuxième pack de batteries (31, 32) connectés respectivement aux deux circuits électriques haute-tension (26, 27),
- un premier et un deuxième système de gestion des batteries (34, 35) connectés au circuit basse-tension (28), les systèmes de gestion des batteries (34, 35) étant reliés respectivement aux deux packs de batteries (31, 32).

2. Dispositif selon la revendication 1, **caractérisé en ce qu'**il comporte une batterie de secours (42) connectée au premier système de gestion des batteries (34) par l'intermédiaire d'un interrupteur (43), la batterie de secours (42) étant apte à délivrer le courant nécessaire pour la mise en marche du dispositif (25).

3. Dispositif selon la revendication 1 ou 2, **caractérisé en ce qu'**il comporte :
- un circuit électrique très basse-tension (29) connecté à au moins un organe (50) de contrôle et/ou de commande de l'aéronef (10) et
- un convertisseur électrique (38) connecté d'une part audit circuit électrique basse-tension (28) et d'autre part audit circuit électrique très basse-tension (29).

4. Dispositif selon l'une des revendications 1 à 3, **caractérisé en ce qu'**il comporte une prise de charge (52) connecté sur les deux circuits électriques haute-tension (26, 27), la prise de charge (52) étant apte à recharger les deux packs de batteries (31, 32).

5. Dispositif selon l'une des revendications 1 à 4, **caractérisé en ce qu'**il comporte un premier et un deuxième onduleur de tension (39, 40) aptes à transformer une tension continue haute-tension en énergie alternative triphasée par hachage, chaque onduleur (39, 40) étant connecté entre un circuit électrique haute-tension (26, 27) et le moteur électrique correspondant (20, 21).

6. Dispositif selon la revendication 5, **caractérisé en ce qu'**il comporte un premier et un deuxième système de gestion moteur (54, 55) connectés entre un circuit électrique haute tension (26, 27) et l'onduleur (39, 40) correspondant, chaque système de gestion moteur (54, 55) comportant au moins un capteur à effet Hall apte à renseigner sur la position du moteur, un interrupteur principal apte à couper l'alimentation électrique du moteur et un moyen de supervision de la tension appliquée au moteur.

7. Dispositif selon la revendication 6, **caractérisé en ce que** les systèmes de gestion moteur (54, 55) et les systèmes de gestion des batteries (34, 35) comportent un convertisseur de secours connecté au deuxième circuit électrique haute-tension (27).

8. Dispositif selon l'une des revendications 1 à 7, **caractérisé en ce qu'**au moins un pack de batteries (31, 32) comporte des batteries Lithium-ion pour une capacité de stockage totale comprise entre 40 et 80Ah.

9. Aéronef à propulsion électrique (10) comportant au moins deux moteurs électriques (20, 21) et un dispositif d'alimentation (25) selon l'une des revendications 1 à 8.

10. Procédé de démarrage d'un aéronef à propulsion électrique (10) selon la revendication 9, **caractérisé en ce qu'**il comporte les étapes suivantes :
- fermeture d'un interrupteur (43) pour connecter une batterie de secours (42) au premier système de gestion des batteries (34),
- vérification de la tension de la batterie de secours (42) au moyen du système de gestion des batteries (34) et interruption du démarrage si la tension de la batterie de secours (42) est inférieure à un seuil critique,
- mise en route d'une précharge d'un onduleur (39, 40),
- fermeture d'un contacteur d'un pack de batteries (31, 32),
- mise en route du convertisseur électrique (37),
- vérification de la tension d'au moins un pack de batteries (31, 32) au moyen du système de gestion des batteries (34) et interruption du démarrage si la tension d'au moins un pack de batterie (31, 32) est inférieure à un seuil critique, et
- ouverture de l'interrupteur (43) pour déconnecter la batterie de secours (42).

## Patentansprüche

1. Stromversorgungsvorrichtung (25) für ein Luftfahrzeug mit elektrischem Antrieb (10), die aufweist:
- einen ersten und einen zweiten Elektromotor (20, 21), die den Antrieb des Luftfahrzeugs (10) gewährleisten können,
- einen ersten und einen zweiten Hochspannungsstromkreis (26, 27), die je mit den zwei Elektromotoren (20, 21) verbunden sind,
- einen Niederspannungsstromkreis (28), der mit mindestens einem Kontroll- und/oder Steuerorgan (49) des Luftfahrzeugs (10) verbunden ist,
- einen Stromwandler (37), der einerseits mit dem ersten Hochspannungsstromkreis (26) und andererseits mit dem Niederspannungsstromkreis (46, 50) verbunden ist,
**dadurch gekennzeichnet, dass** sie aufweist:
- ein erstes und ein zweites Batteriepack (31, 32), die je mit den zwei Hochspannungsstromkreisen (26, 27) verbunden sind,
- ein erstes und ein zweites Verwaltungssystem der Batterien (34, 35), die mit dem Niederspannungskreis (28) verbunden sind, wobei die Verwaltungssysteme der Batterien (34, 35) je mit den zwei Batteriepacks (31, 32) verbunden sind.

2. Vorrichtung nach Anspruch 1, **dadurch gekennzeichnet, dass** sie eine Notbatterie (42) aufweist, die mit dem ersten Verwaltungssystem der Batterien (34) über einen Schalter (43) verbunden ist, wobei die Notbatterie (42) den Strom liefern kann, der für die Inbetriebsetzung der Vorrichtung (25) notwendig ist.

3. Vorrichtung nach Anspruch 1 oder 2, **dadurch gekennzeichnet, dass** sie aufweist:
- einen Kleinspannungsstromkreis (29), der mit mindestens einem Kontroll- und/oder Steuerorgan (50) des Luftfahrzeugs (10) verbunden ist, und
- einen Stromwandler (38), der einerseits mit dem Niederspannungsstromkreis (28) und andererseits mit dem Kleinspannungsstromkreis (29) verbunden ist.

4. Vorrichtung nach einem der Ansprüche 1 bis 3, **dadurch gekennzeichnet, dass** sie einen Ladestecker (52) aufweist, der mit den zwei Hochspannungsstromkreisen (26, 27) verbunden ist, wobei der Ladestecker (52) die zwei Batteriepacks (31, 32) aufladen kann.

5. Vorrichtung nach einem der Ansprüche 1 bis 4, **dadurch gekennzeichnet, dass** sie einen ersten und einen zweiten Spannungswechselrichter (39, 40) aufweist, die eine Hochspannungs-Gleichspannung in eine dreiphasige alternative Energie durch Zerhacken umwandeln kann, wobei jeder Wechselrichter (39, 40) zwischen einem Hochspannungsstromkreis (26, 27) und dem entsprechenden Elektromotor (20, 21) verbunden ist.

6. Vorrichtung nach Anspruch 5, **dadurch gekennzeichnet, dass** sie ein erstes und ein zweites Motor-Verwaltungssystem (54, 55) aufweist, die zwischen einem Hochspannungsstromkreis (26, 27) und dem entsprechenden Wechselrichter (39, 40) verbunden sind, wobei jedes Motor-Verwaltungssystem (54, 55) mindestens einen Hall-Sensor, der über die Stellung des Motors informieren kann, einen Hauptschalter, der die Stromversorgung des Motors unterbrechen kann, und eine Überwachungseinrichtung der an den Motor angelegten Spannung aufweist.

7. Vorrichtung nach Anspruch 6, **dadurch gekennzeichnet, dass** die Motor-Verwaltungssysteme (54, 55) und die Verwaltungssysteme der Batterien (34, 35) einen Hilfswandler aufweisen, der mit dem zweiten Hochspannungsstromkreis (27) verbunden ist.

8. Vorrichtung nach einem der Ansprüche 1 bis 7, **dadurch gekennzeichnet, dass** mindestens ein Batteriepack (31, 32) Lithium-Ionen-Batterien für eine Gesamtspeicherkapazität zwischen 40 und 80 Ah aufweist.

9. Luftfahrzeug mit elektrischem Antrieb (10), das mindestens zwei Elektromotoren (20, 21) und eine Versorgungsvorrichtung (25) nach einem der Ansprüche 1 bis 8 aufweist.

10. Startverfahren eines Luftfahrzeugs mit elektrischem Antrieb (10) nach Anspruch 9, **dadurch gekennzeichnet, dass** es die folgenden Schritte aufweist:
- Schließen eines Schalters (43), um eine Notbatterie (42) mit dem ersten Verwaltungssystem der Batterien (34) zu verbinden,
- Überprüfen der Spannung der Notbatterie (42) mittels des Verwaltungssystems der Batterien (34) und Unterbrechen des Starts, wenn die Spannung der Notbatterie (42) niedriger als eine kritische Schwelle ist,
- Einschalten einer Vorlast eines Wechselrichters (39, 40),
- Schließen eines Schützes eines Batteriepacks (31, 32),
- Einschalten des Stromwandlers (37),
- Überprüfen der Spannung mindestens eines Batteriepacks (31, 32) mittels des Verwaltungssystems der Batterien (34) und Unterbrechen des Starts, wenn die Spannung mindestens eines Batteriepacks (31, 32) niedriger als eine kritische Schwelle ist, und
- Öffnen des Schalters (43), um die Notbatterie (42) abzuklemmen.

## Claims

1. An electric power supply device (25) for an electric aircraft (10), comprising:
- a first and a second electric motor (20, 21) which are capable of propelling the aircraft (10),
- a first and a second high-voltage electric circuit (26, 27) which are connected respectively to the two electric motors (20, 21),
- a low-voltage electric circuit (28) connected to at least one command and/or control member (49) of the aircraft (10),
- an electric converter (37) connected, on the one hand, to the first high-voltage electric circuit (26) and, on the other hand, to the low-voltage electric circuit (46, 50), **characterized in that** it comprises:
- a first and a second battery pack (31, 32) which are connected respectively to the two high-voltage electric circuits (26, 27),
- a first and a second battery management system (34, 35) which are connected to the low-voltage circuit (28), the battery management systems (34, 35) being connected respectively to the two battery packs (31, 32),

2. The device as claimed in claim 1, **characterized in that** it comprises a backup battery (42) connected to the first battery management system (34) via a switch (43), the backup battery (42) being able to deliver the current necessary to bring the device (25) into operation.

3. The device as claimed in claim 1 or 2, **characterized in that** it comprises:
- an ultra-low-voltage electric circuit (29) connected to at least one command and/or control member (50) of the aircraft (10), and
- an electric converter (38) connected, on the one hand, to said low-voltage electric circuit (28) and, on the other hand, to said ultra-low-voltage electric circuit (29).

4. The device as claimed in one of claims 1 to 3, **characterized in that** it comprises a charging plug (52) connected to the two high-voltage electric circuits (26, 27), the charging plug (52) being able to recharge the two battery packs (31, 32).

5. The device as claimed in one of claims 1 to 4, **characterized in that** it comprises a first and a second voltage inverter (39, 40) which are able to convert a high-voltage DC voltage into a three-phase AC supply by chopping, each inverter (39, 40) being connected between a high-voltage electric circuit (26, 27) and the corresponding electric motor (20, 21).

6. The device as claimed in claim 5, **characterized in that** it comprises a first and a second motor management system (54, 55) which are connected between a high-voltage electric circuit (26, 27) and the corresponding inverter (39, 40), each motor management system (54, 55) comprising at least one Hall-effect sensor able to provide information regarding the position of the motor, a main switch able to cut the supply of electricity to the motor and a means of supervising the voltage applied to the motor.

7. The device as claimed in claim 6, **characterized in that** the motor management systems (54, 55) and the battery management systems (34, 35) comprise a backup converter connected to the second high-voltage electric circuit (27).

8. The device as claimed in one of claims 1 to 7, **characterized in that** at least one battery pack (31, 32) comprises lithium-ion batteries for a total storage capacity of between 40 and 80Ah.

9. An electric aircraft (10) comprising at least two electric motors (20, 21) and a power supply device (25) as claimed in one of claims 1 to 8.

10. A method for starting an electric aircraft (10) as claimed in claim 9, **characterized in that** it comprises the following steps:
- closing a switch (43) to connect a backup battery (42) to the first battery management system (34),
- checking the voltage of the backup battery (42) using the battery management system (34) and interrupting the start if the voltage of the backup battery (42) is below a critical threshold,
- setting into operation a precharging of an inverter (39, 40),
- closure of a contact switch of a battery pack (31, 32),
- setting into operation of the electric converter (37),
- checking of the voltage of at least one battery pack (31, 32) using the battery management system (34) and interrupting the start if the voltage of at least one battery pack (31, 32) is below a critical threshold, and
- opening of the switch (43) to disconnect the backup battery (42).
